# EUROPÄISCHE PATENTSCHRIFT

(11) **EP 1 583 916 B1**
(45) Veröffentlichungstag und Bekanntmachung des Hinweises auf die Patenterteilung: **12.08.2009**
(21) Anmeldenummer: 04701596.1
(22) Anmeldetag: 13.01.2004
(51) Int. Cl.: F16J 15/08, F16J 15/12

(54) **ZYLINDERKOPFDICHTUNG**
CYLINDER HEAD GASKET
JOINT DE CULASSE

(30) Priorität: 13.01.2003 DE 10301713
(43) Veröffentlichungstag der Anmeldung: 12.10.2005
(73) Patentinhaber: REINZ-Dichtungs-GmbH, 89233 Neu-Ulm (DE)
(72) Erfinder: UNSELD, Günther, 89189 Neenstetten (DE); WIDMANN, Erwin, 89165 Dietenheim (DE); LUDWIG, Josef, 89168 Niederstotzingen (DE); WALTENBERG, Hans-Dieter, 89231 Neu-Ulm (DE); GRAFL, Dieter, 89081 Ulm (DE)
(74) Vertreter: Pfenning, Meinig & Partner GbR
(86) Internationale Anmeldenummer: PCT/EP2004/000165
(87) Internationale Veröffentlichungsnummer: WO 2004/063604

(56) Entgegenhaltungen:
- EP-A- 0 867 645
- DE-A- 3 902 966

## Beschreibung

Die Erfindung betrifft eine Zylinderkopfdichtung nach dem Oberbegriff des Anspruchs 1.

Als Zylinderkopfdichtungen haben sich Metalldichtungen durchgesetzt, die aus mehreren Lagen vorzugsweise aus Stahl bestehen, wobei die erforderliche Elastizität dadurch hergestellt wird, dass mindestens eine der Lagen eine die Brennraum-Durchgangsöffnung umgebende Sicke aufweist.

Bei neueren Verbrennungsmotoren werden zunehmend der Zylinderkopf aus Aluminium und der Zylinderblock aus Magnesium gefertigt. Aluminium und Magnesium sind jedoch in der elektrochemischen Spannungsreihe sehr unterschiedlich, so dass sie, um Korrosionserscheinungen zu vermeiden, elektrisch gegeneinander isoliert werden müssen. Dies gilt in geringerem Maße auch für die Kombination von Aluminium und Stahl bzw. Magnesi-Magnesium und Stahl. Dieses Problem wird dadurch verringert, dass die einzelnen Stahllagen oder Dichtungsbleche einen elektrisch isolierenden Überzug erhalten. Dieser befindet sich jedoch nur auf der Oberseite und der Unterseite, während die Stirnseiten der durch Stanzen hergestellten Stahllagen diesen Überzug nicht aufweisen. Dies ist besonders kritisch für die äußere Stirnseite, da diese Witterungseinflüssen ungeschützt ausgesetzt ist und auch mit Spritzwasser bzw. Kondenswasser in Berührung kommen kann. Daher ist die Gefahr einer elektrischen Verbindung zwischen Aluminium und Stahl, zwischen Stahl und Magnesium sowie über die Stahllagen auch zwischen Aluminium und Magnesium und damit einer schnellen Korrosion sehr groß.

Die DE 39 02 966 A offenbart eine Laminatdichtung mit einer oberen und einer unteren Dichtungsplatte. Die untere Dichtungsplatte steht an ihrem Außenrand über die obere Dichtungsplatte über und ist dort mit einer Sicke als umlaufende Dichtung versehen. Die Ober- und Unterseite der Sicke ist mit einem Elastomer beschichtet.

Die EP-A-0 867 645 betrifft eine Flachdichtung für Brennkraftmaschinen mit mindestens einer Metalllage, auf der ein oder beidseitig eine Elastomerbeschichtung aufgebracht ist.

Es ist daher die Aufgabe der vorliegenden Erfindung, eine Zylinderkopfdichtung für einen Verbrennungsmotor, mit mindestens zwei übereinander liegenden, eine gemeinsame Brennraum-Durchgangsöffnung bildenden Dichtungsblechen, von denen mindestens eines mit einer die Brennraum-Durchgangsöffnung umgebenden Sicke versehen ist, zu schaffen, mit der das Auftreten von Korrosionserscheinungen insbesondere am Zylinderkopf und am Zylinderblock weitgehend unterbunden werden kann.

Diese Aufgabe wird erfindungsgemäß gelöst durch eine Zylinderkopfdichtung mit den Merkmalen des Anspruchs 1. Vorteilhafte Weiterbildungen der erfindungsgemäßen Zylinderkopfdichtung ergeben sich aus den Unteransprüchen.

Dadurch, dass eines der Dichtungsbleche am Außenumfang über das mindestens eine andere Dichtungsblech vorsteht und am Außenrand eine umlaufende Dichtung oder Silikon oder Elastomere trägt, die im eingebauten Zustand der Zylinderkopf dichtung den Spalt zwischen Zylinderkopf und Zylinderblock abdichtet, wird das Eindringen von Feuchtigkeit in den Spalt zwischen Zylinderkopf und Zylinderblock vollständig verhindert. Weiterhin ist dadurch, dass das eine Dichtungsblech über das mindestens eine andere Dichtungsblech vorsteht, eine durchgehende elektrische Verbindung über die Stirnseiten der anderen Dichtungsbleche nicht möglich. Schließlich ist dies auch eine sehr einfache und kostengünstige Lösung, da trotz der Anbringung der Dichtung an nur einem Dichtungsblech auch alle anderen Dichtungsbleche vollständig geschützt sind.

Die Dichtung ist vorzugsweise so dimensioniert, dass sie im eingebauten Zustand der Zylinderkopfdichtung an der Stirnfläche des mindestens einen anderen Dichtungsbleches anliegt. Dadurch wird diese Stirnfläche elektrisch isoliert und auch etwaige in den Spalt zwischen Zylinderkopf und Zylinderblock eingedrungene Feuchtigkeit wird an einer Ausbreitung gehindert.

Als besonders geeignete Materialien für die Dichtung sind Elastomere, wie z.B. Silikon, FPM (Fluorelastomere, insbesondere PFA und MFA), TPE (thermoplastische Elastomere), PU (Polyurethan), ACM (Methylacrylate) sowie PEEK (Polyether-Etherketone) zu nennen, die einerseits die erforderlichen Eigenschaften wie hohe Elastizität, Druckbeständigkeit, Resistenz gegen äußere Einflüsse und dergleichen aufweisen, und andererseits eine problemlose Herstellung der Dichtung beispielsweise im Press-, Transfer- oder Spritzgießvorgang oder Schablonendruck oder Kombinationen hiervon ermöglichen.

Vorteilhaft sollte die Dichtung im eingebauten Zustand der Zylinderkopfdichtung zwischen 5 % und 50 % komprimiert sein, wodurch eine ausreichende Dichtheit erhalten wird, ohne dass die Dichtung übermäßig beansprucht wird. Dies bedeutet, dass bei einer Dicke der Zylinderkopfdichtung von etwa 0,7 mm die Dicke der Dichtung im unkomprimierten Zustand etwa 0,8 bis 1,2 mm beträgt. Generell ist davon auszugehen, dass die Dicke der unkomprimierten Dichtung abhängig von der Dicke der Zylinderkopfdichtung im Bereich zwischen 0,5 bis 4,0 mm, vorzugsweise 0,5 bis 2,0 mm liegt.

Die Dichtung steht im eingebauten Zustand der Zylinderkopfdichtung über die Außenfläche des Zylinderblocks vor, wobei dieser Überstand zweckmäßigerweise im Bereich von 1 bis 8 mm liegen sollte. Hierdurch wird erreicht, dass von der Dichtung herabtropfendes Wasser nicht mit der Außenwand des Zylinderblocks in Berührung kommt. Dies wirkt sich korrosionsmindernd bei dem aus dem an sich sehr korrosionsanfälligen Magnesium bestehenden Zylinderblock aus.

Bevorzugt weist die erfindungsgemäße Dichtung zusätzlich eine Abtropfvorrichtung, bevorzugt in Nasenform auf, die den Abtropfvorgang beschleunigt und erleichtert.

Die Erfindung wird im Folgenden anhand von in den Figuren dargestellten Ausführungsbeispielen näher erläutert. Diese zeigen jeweils eine Ausführungsform einer Dichtung im Querschnitt vor der Befestigung des Zylinderkopfes auf dem Zylinderblock, d.h. in unkomprimiertem Zustand.

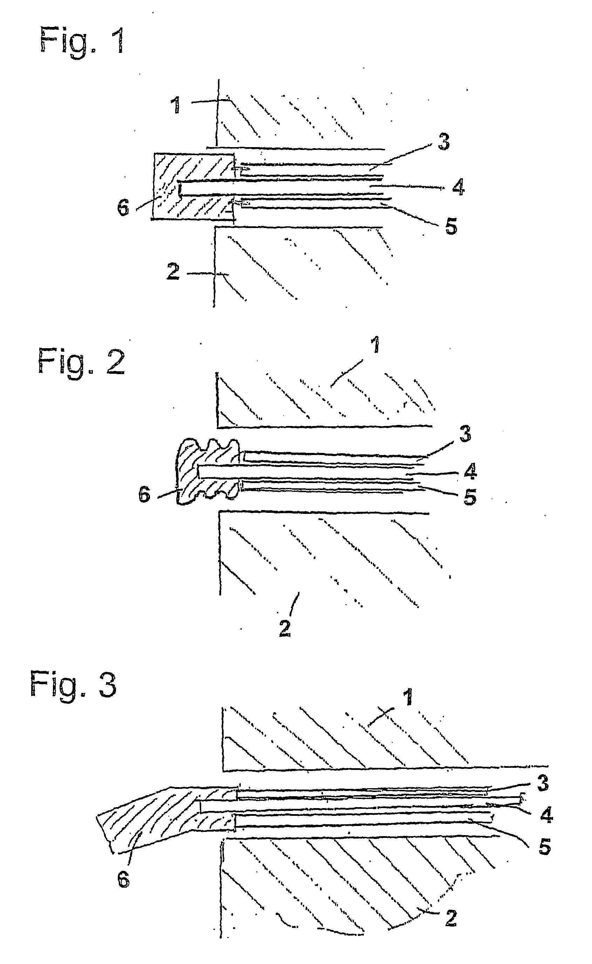

Die Fign. 1 bis 7 zeigen jeweils angedeutet einen Zylinderkopf 1, der im Wesentlichen aus Aluminium besteht, und einen Zylinderblock 2, der im Wesentlichen aus Magnesium besteht. Zwischen diesen befindet sich eine Zylinderkopfdichtung aus jeweils übereinander liegenden Stahllagen 3, 4, 5, 7 und/oder 8. Die Figuren zeigen jeweils den äußeren Randbereich des Zylinderkopfes 1 und Zylinderblocks 2, d.h. den Bereich, in welchem der zwischen ihnen gebildete Spalt von außen zugänglich ist. Die gezeigten Schnittdarstellungen zeigen eine sich entlang des gesamten Umfangs des Zylinderkopfes 1 bzw. Zylinderblocks 2 nicht verändernde Struktur. Im Innern bilden der Zylinderkopf 1 und der Zylinderblock 2 einen oder mehrere Brennräume und die Zylinderkopfdichtung enthält entsprechende Brennraum-Durchgangsöffnungen, um durchgehende Brennräume zwischen Zylinderblock und Zylinderkopf zu schaffen. Die Stahllagen 3, 4, 5, 7 und/oder 8 können in bekannter Weise mit die Brennraum-Durchgangsöffnungen vollständig umgebenden Sicken oder Kröpfungen (nicht gezeigt) versehen sein, um eine dauerhafte Elastizität der Zylinderkopfdichtung in Richtung der im eingebauten Zustand von Zylinderkopf 1 und Zylinderblock 2 auf sie ausgeübten Druckkräfte sicherzustellen.

Mindestens eine der Stahllagen 3, 4, 5, 7 und 8 sind jeweils auf der Oberseite und der Unterseite mit einem elektrisch isolierenden Überzug wie der: aus der DE 197 13 053 A1 bekannten Gleitschicht versehen. Da die Stahllagen 3, 4, 5, 7 und 8 jedoch durch Stanzen hergestellt werden, ist auf ihren Stirn- bzw. Randseiten kein Überzug vorhanden, so dass sie dort elektrisch kontaktiert werden können.

Liegen daher die Außenränder aller Stahllagen unmittelbar übereinander und sind diese auch noch ungeschützt den Witterungsbedingungen ausgesetzt, so ist die Gefahr sehr groß, dass sich Feuchtigkeit auf ihren Stirnseiten ansammelt und eine durchgehende elektrische Verbindung zwischen dem Zylinderkopf 1 und dem Zylinderblock 2 entsteht. Da diese aus Materialien bestehen, die in der elektrochemischen Spannungsreihe weit auseinander liegen, muss eine starke Korrosion insbesondere des im Wesentlichen aus Magnesium hergestellten Zylinderblocks 1 befürchtet werden.

Diese Nachteile werden durch eine am Außenrand der Zylinderkopfdichtung angebracht Dichtung 6 vermieden. Zu diesem Zweck ragt eine der Stahllagen, in den Fign. 1 bis 7 jeweils die innere Stahllage 4, über die Außenränder der Stahllagen 3, 5, 7 und/oder 8 hinaus, so dass an dem überstehenden Rand der Stahllage 4 die Dichtung 6 befestigt werden kann. Die Außenränder der Stahllagen 3, 5, 7 und 8 sind gegenüber den Außenflächen des Zylinderkopfes 1 und des Zylinderblocks 2 etwas zurückgezogen, so dass die Dichtung 6 einerseits die ganze Spalthöhe ausfüllen, d.h. auch die Stirnseiten der Stahllagen 3, 5, 7 und 8 abdecken, und andererseits nach innen zwischen den Zylinderkopf 1 und den Zylinderblock 2 ragen und somit fest zwischen diesen eingespannt werden kann. Auf diese Weise ist der die Zylinderkopfdichtung enthaltende Spalt zwischen Zylinderkopf 1 und Zylinderblock 2 fest abgedichtet, so dass keine Feuchtigkeit in diesen eindringen kann. Die Gefahr einer Korrosion ist dadurch ausgeschlossen.

Dadurch, dass die eine Stahllage über die Außenränder der anderen Stahllagen vorsteht, liegen auch nicht alle Außenränder direkt übereinander, so dass eine durchgehende elektrische Verbindung zwischen Zylinderkopf 1 und Zylinderblock 2 in jedem Falle durch die überstehende Stahllage 4 unterbrochen wird.

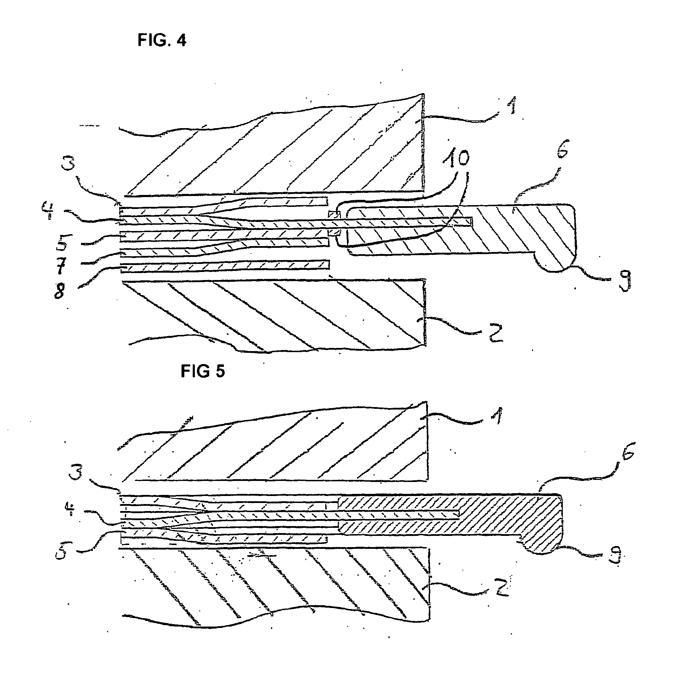

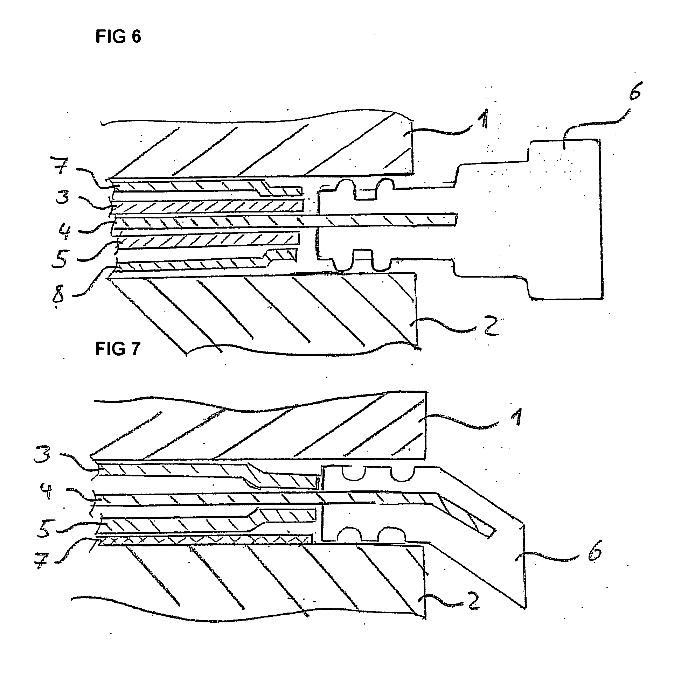

Die in den Fign. 1 bis 7 gezeigten Dichtungen 6 unterscheiden sich im Wesentlichen durch ihre äußere Form. Die Dichtung 6 nach Fig. 1 hat einen rechteckigen Querschnitt, während die Dichtung 6 nach Fig. 2 auf der Ober- und der Unterseite wellenförmig ausgebildet ist, um eine bessere Dichtwirkung zu erzielen. Bei der Dichtung 6 nach Fig. 3 ist der aus dem Spalt zwischen Zylinderkopf 1 und Zylinderblock 2 herausragende Teil schräg nach unten abgewinkelt. Bei dieser Ausführungsform wirkt das nach unten weisende Eck der Dichtung 6 als Tropfvorrichtung 9 und bewirkt somit besonders günstige Wasserablaufeigenschaften. In den Figuren 4 und 5 ist die Dichtung 6 mit einer Tropfvorrichtung in Nasenform 9, die sich als Wulst an der unteren Außenseite darstellt, versehen. In Figur 6 ist eine zu Figur 2 vergleichbare Dichtung 6 dargestellt, die an der Ober- und der Unterseite wellenförmig ausgebildet ist, um im äußeren Bereich sich stufenweise auszuweiten.

In Figur 7 ist eine Dichtung 6 dargestellt, die analog zur Ausführungsform gemäß Figur 3 eine Tropfvorrichtung durch Abwinklung ausbildet, zusätzlich aber auf den zum Zylinderkopf 1 und Zylinderblock 2 zugewanten Seiten Ausnehmungen aufweist.

Die Dichtungen 6 sind jeweils so angeordnet, dass sie aus dem genannten Spalt herausragen, wobei dieser Überstand etwa im Bereich von 1 bis 8 mm liegen sollte. Diese Maßnahme hat den Zweck, dass Feuchtigkeit, die sich auf der Außenseite der Dichtung 6 gesammelt hat und von dieser heruntertropft, nicht mit der Außenfläche des Zylinderblocks 2 in Berührung kommt. Hierdurch kann die Korrosionsgefahr weiter verringert werden.

Als Material der Dichtung 6 empfehlen sich Elastomere, insbesondere Silikon, FPM (Fluorelastomere, insbesondere PFA und MFA), TPE (thermoplastische Elastomere), PU (Polyurethan), ACM (Methylacrylate) sowie PEEK (Polyether-Etherketone). Die Herstellung der Dichtung 6 erfolgt am einfachsten durch Umspritzen des Außenrandes der Stahllage 4 oder durch Schablonendruck. Bevorzugt werden in der Lage 4 umlaufend Auffanglippen 10 eingeprägt, die ein Überlaufen der Elastomermasse auf den Bereich jenseits der Auffanglippen 10 verhindern. Die Dicke der Dichtung 6 sollte so bemessen sein, dass sie nach dem Einbau der Zylinderkopfdichtung etwa zwischen 5 % und 50 % komprimiert ist, so dass zum einen die erforderliche Abdichtung erhalten ist und zum anderen das Dichtungsmaterial noch nicht durch zu starke Kompression beschädigt ist. Bei einer Dicke der Zylinderkopfdichtung von etwa 0,7 mm liegt somit die Dicke der unverdichteten Dichtung 6 etwa zwischen 0,8 und 1,2 mm.

Die Dichtung 6 sollte soweit in den Spalt zwischen Zylinderkopf 1 und Zylinderblock 2 hineinragen, dass sie sicher zwischen diesen gehalten wird und zumindest in komprimiertem Zustand gegen die Stirnfläche der Stahllagen 3 und 5 drückt, wie dies in Fig. 3 gezeigt ist, so dass sich hieraus ein weiterer Schutz gegen Korrosion ergibt.

## Patentansprüche

1. Zylinderkopfdichtung zur Abdichtung zwischen dem Zylinderblock (2) und dem Zylinderkopf (1) eines Verbrennungsmotors mit mindestens zwei übereinander liegenden, eine gemeinsame Brennraum-Durchgangsöffnung bildenden Dichtungsblechen (3, 4, 5), von denen mindestens eines mit einer die Brennraum-Durchgangsöffnung umgebenden Sicke versehen ist,
wobei eines der Dichtungsbleche (4) am Außenumfang über das mindestens eine andere Dichtungsblech (3, 5) vorsteht und am Außenrand eine umlaufende Dichtung (6) trägt, **dadurch gekennzeichnet, daß** die Dichtung das vorstehende Dichtungsblech stirnseitig umgibt, und daß die Dichtung aus Silikon oder Elastomer besteht und die so ausgebildet ist, dass sie im eingebauten Zustand der Zylinderkopfdichtung über die Außenfläche des Zylinderblocks (2) vorsteht und den Spalt zwischen Zylinderkopf (1) und Zylinderblock (2) abdichtet.

2. Zylinderkopfdichtung nach Anspruch 1, **dadurch gekennzeichnet, dass** die Dichtungsbleche (3, 4, 5) auf ihrer Ober- und Unterseite jeweils mit einer Gleitschicht versehen sind.

3. Zylinderkopfdichtung nach Anspruch 1 oder 2, **dadurch gekennzeichnet, dass** die Dichtung (6) in eingebautem Zustand der Zylinderkopfdichtung an der äußeren Stirnfläche des mindestens einen anderen Dichtungsbleches (3, 5) anliegt.

4. Zylinderkopfdichtung nach einem der Ansprüche 1 bis 3, **dadurch gekennzeichnet, dass** die Dichtung (6) durch einen Spritzvorgang oder durch Schablonendruck aufgebracht ist.

5. Zylinderkopfdichtung nach einem der Ansprüche 1 bis 4, **dadurch gekennzeichnet, dass** die Dichtung (6) im eingebauten Zustand der Zylinderkopfdichtung zwischen 5 % und 50 % komprimiert ist.

6. Zylinderkopfdichtung nach einem der Ansprüche 1 bis 5, **dadurch gekennzeichnet, dass** der Überstand der Dichtung (6) über die Außenfläche des Zylinderblocks (2) etwa 1 bis 8 mm beträgt.

7. Zylinderkopfdichtung nach einem der Ansprüche 1 bis 6, **dadurch gekennzeichnet, dass** die Dicke der Dichtung (6) in unkomprimiertem Zustand im Bereich von 0,5 bis 2,0 mm liegt.

## Claims

1. A cylinder-head gasket for sealing between the cylinder block (2) and the cylinder head (1) of an internal-combustion engine with at least two sealing plates (3, 4, 5) which are arranged one above the other and which form a common combustion-chamber through-opening and at least one of which is provided with a bead surrounding the combustion-chamber through-opening, wherein one of the sealing plates (4) projects on the external periphery beyond the at least one other sealing plate (3, 5) and on the outer edge carries a continuous seal (6), **characterized in that** the seal surrounds the projecting sealing plate on the end face, and the seal consists of silicone or elastomer and is designed in such a way that in the fitted state of the cylinder-head gasket it projects beyond the outer face of the cylinder block (2) and seals the gap between the cylinder head (1) and the cylinder block (2).

2. A cylinder-head gasket according to Claim 1, **characterized in that** the sealing plates (3,4,5) are provided on their top side and underside with a sliding layer in each case.

3. A cylinder-head gasket according to Claim 1 or 2, **characterized in that** in the fitted state of the cylinder-head gasket the seal (6) rests against the outer end face of the at least one other sealing plate (3, 5).

4. A cylinder-head gasket according to any one of Claims 1 to 3, **characterized in that** the seal (6) is applied by an injection procedure or by stencil printing.

5. A cylinder-head gasket according to any one of Claims 1 to 4, **characterized in that** in the fitted state of the cylinder-head gasket the seal (6) is compressed by between 5 % and 50 %.

6. A cylinder-head gasket according to any one of Claims 1 to 5, **characterized in that** the projection of the seal (6) beyond the outer face of the cylinder block (2) amounts to approximately from 1 to 8 mm.

7. A cylinder-head gasket according to any one of Claims 1 to 6, **characterized in that** the thickness of the seal (6) in the non-compressed state is in the range of from 0·5 to 2·0 mm.

## Revendications

1. Joint de culasse pour l'étanchéité entre le bloc-cylindres (2) et la tête de cylindre (1) d'un moteur à combustion interne avec au moins deux tôles d'étanchéité (3, 4, 5) se trouvant l'une au-dessus de l'autre, formant une ouverture de passage commune à la chambre de combustion, dont au moins une est pourvue d'une moulure entourant l'ouverture de passage à la chambre de combustion,
dans lequel l'une des tôles d'étanchéité (4) dépasse sur la périphérie extérieure de l'au moins une autre tôle d'étanchéité (3, 5) et porte sur le bord extérieur un joint (6) périphérique, **caractérisé en ce que** le joint entoure côté avant la tôle d'étanchéité saillante et **en ce que** le joint se compose de silicone ou d'élastomère et est réalisé de sorte qu'il dépasse à l'état intégré du joint de culasse de la surface extérieure du bloc-cylindres (2) et rend étanche la fente entre la tête de cylindre (1) et le bloc-cylindres (2).

2. Joint de culasse selon la revendication 1, **caractérisé en ce que** les tôles d'étanchéité (3, 4, 5) sont pourvues sur leur côté supérieur et inférieur respectivement d'une couche de glissement.

3. Joint de culasse selon la revendication 1 ou 2, **caractérisé en ce que** le joint (6) repose à l'état intégré du joint de culasse sur la surface avant extérieure de l'au moins une autre tôle d'étanchéité (3, 5).

4. Joint de culasse selon l'une quelconque des revendications 1 à 3, **caractérisé en ce que** le joint (6) est appliqué par un processus de moulage par injection ou par sérigraphie.

5. Joint de culasse selon l'une quelconque des revendications 1 à 4, **caractérisé en ce que** le joint (6) est comprimé à l'état intégré du joint de culasse entre 5 et 50 %.

6. Joint de culasse selon l'une quelconque des revendications 1 à 5, **caractérisé en ce que** le porte-à-faux du joint (6) au-dessus de la surface extérieure du bloc-cylindres (2) est compris environ entre 1 et 8 mm.

7. Joint de culasse selon l'une quelconque des revendications 1 à 6, **caractérisé en ce que** l'épaisseur du joint (6) se trouve à l'état non comprimé dans la plage de 0,5 à 2 mm.
